(19) Europäisches Patentamt
European Patent Office
Office européen des brevets

(11) **EP 1 764 627 A1**

(12) **EUROPÄISCHE PATENTANMELDUNG**

(43) Veröffentlichungstag:
   **21.03.2007  Patentblatt 2007/12**

(51) Int Cl.:
   **G01S 13/75** (2006.01)     **G01S 7/03** (2006.01)
   **G01S 13/08** (2006.01)

(21) Anmeldenummer: **05020151.6**

(22) Anmeldetag: **15.09.2005**

(84) Benannte Vertragsstaaten:
   **AT BE BG CH CY CZ DE DK EE ES FI FR GB GR HU IE IS IT LI LT LU LV MC NL PL PT RO SE SI SK TR**
   Benannte Erstreckungsstaaten:
   **AL BA HR MK YU**

(71) Anmelder: **SIEMENS AKTIENGESELLSCHAFT**
   **80333 München (DE)**

(72) Erfinder:
   • **Gila, Janos, Dr.**
     **2340 Mödling (AT)**
   • **Konrad, Wolfgang, Dr.**
     **2340 Mödling (AT)**
   • **Österreicher, Johannes**
     **2380 Perchtoldsdorf (AT)**

(54) **Verfahren und Vorrichtung zur Abstandsbestimmung zwischen einem RFID Schreib-/ Lesegerät und einem mobilen RFID-Datenspeicher**

(57)    Die Erfindung betrifft ein Verfahren und eine Vorrichtung zur Bestimmung des Abstandes zwischen einem Schreib-/Lesegerät und einem mobilen Datenspeicher. Es wird ein HF-Trägersignal erzeugt, das sequentiell alternierend eine erste und zweite Trägereckfrequenz aufweist, die bei Frequenzwechsel phasengleich sind. Das HF-Trägersignal wird abgestrahlt und mit einem zuvor abgestrahlten, vom mobilen Datenspeicher reflektierten HF-Trägersignal zu einem Trägerphasensignal gemischt. Für die im Trägerphasensignal enthaltenen Trägereckfrequenzen wird jeweils eine Trägerphase bestimmt, und aus der Differenz der Trägerphasen wird der Abstand zwischen dem Schreib-/Lesegerät und dem mobilen Datenspeicher ermittelt, wobei eine Eindeutigkeitsgrenze für die Abstandsbestimmung größer ist als eine Erfassungsgrenze, wobei die Eindeutigkeitsgrenze von der Differenz der Trägereckfrequenzen abhängt und wobei die Erfassungsgrenze der größte bestimmbare Abstand zwischen dem Schreib-/Lesegerät und dem mobilen Datenspeicher ist.

FIG 3

EP 1 764 627 A1

**Beschreibung**

Die Erfindung betrifft ein Verfahren und eine Vorrichtung zur Bestimmung des Abstandes zwischen einem Schreib-/Lesegerät und einem mobilen Datenspeicher im Allgemeinen und ein Verfahren und eine Vorrichtung zur Erweiterung der Eindeutigkeitsgrenze der Abstandsmessung über den Erfassungsbereich des Schreib-/Lesegeräts im Besonderen.

Zur Bestimmung des Abstandes zwischen einer stationären Basisstation und einem stationären oder beweglichen Objekt, wie zum Beispiel einem Fahrzeug oder einer Person, wird gemäß dem Stand der Technik häufig ein Radarsystem verwendet. In einem Radarsystem werden elektromagnetische Wellen (üblicherweise Mikrowellen in MHz und GHz-Bereich) von der Basisstation gebündelt ausgesendet, und in Form von vom Objekt reflektierten Echos wieder empfangen, die wiederum nach unterschiedlichen Kriterien ausgewertet werden. Eine spezielle Radartechnik stellt die modulierte CW-Radartechnik dar. Die Basisstation sendet Signale mit einer sich ständig ändernden Frequenz. Die Frequenz steigt entweder linear an, um bei einer bestimmten Frequenz abrupt auf den Anfangswert wieder abzufallen (Sägezahnmuster), oder sie steigt und fällt abwechselnd mit konstanter Änderungsgeschwindigkeit. Durch die lineare Änderung der Frequenz und das stetige Senden ist es möglich, neben der Differenzgeschwindigkeit zwischen Basis und Objekt auch gleichzeitig deren absolute Entfernung voneinander zu ermitteln.

Des weiteren sind Identifikationssysteme bekannt, die eine oder mehrere stationäre Basisstationen, sogenannte Schreib-/Lesegeräte enthalten, die Daten mit mobilen Datenspeichern wie zum Beispiel RFID tags, die an beweglichen Objekten angebracht sind, über eine auf Funk basierende Datenübertragungsstrecke berührungslos austauschen. Solche Identifikationssysteme werden in technischen Einrichtungen eingesetzt, in denen eine Vielzahl von Gegenständen bzw. Gütern möglichst schnell und frei bewegt werden müssen. Die Gegenstände können dabei unterschiedlichster Art sein, zum Beispiel Pakete in einer Versandeinrichtung, Montageteile in einer Fertigungsanlage oder zum Beispiel Gepäckstücke in einem Transportsystem.

Ein Beispiel für ein Identifikationssystem ist im ISO-18000-4-MOD-3 Standard mit dem Titel "Radio Frequency Identification Standard for Item Management - Air Interface" beschrieben. Die Norm sieht vor, dass durch das Schreib-/Lesegerät eine Abfrage auf Vorhandensein eines mobilen Datenspeichers im Erfassungsbereich erfolgt. Dazu sendet dieses ein unmoduliertes HF-Trägersignal mit einer festgelegten HF-Trägerfrequenz mit zum Beispiel 2,45 GHz aus. Dieses Trägersignal kann passiv von einem in der Nähe befindlichen mobilen Datenspeicher zum Beispiel durch sogenanntes "Back Scattering" zum Schreib-/Lesegerät mit Daten moduliert zurückgestreut werden und dann dort weiter verarbeitet werden.

Beim Betrieb von zwei oder mehreren nahe beieinander angeordneter Basisstationen und mehreren mobilen Datenspeichern, wie zum Beispiel bei benachbarten Fertigungsstraßen, ist darauf zu achten, dass es nicht zu unerwünschten Wechselwirkungen zwischen den einzelnen Basisstationen und den jeweiligen mobilen Datenspeichern kommt. Es ist daher notwendig, dass der Erfassungsbereich der jeweiligen Basisstation eingeschränkt wird. Diese kann zum Beispiel auf Basis einer Abstandbestimmung zwischen der Basisstation und dem jeweiligen mobilen Datenspeicher erfolgen, wobei ein mobiler Datenspeicher z.B. nur mit dem ihm am nächsten stehenden Schreib-/Lesegerät kommuniziert.

In der Offenlegungsschrift DE 102 61 098 A1 wird ein Verfahren zur Abstandsbestimmung zwischen einer Basisstation und einem mobilen Objekt sowie eine Basisstation und ein Identifikationssystem für ein derartiges Verfahren beschrieben.

Bei diesem Verfahren wird eine HF-Trägerfrequenz sequentiell so um eine Offset-Frequenz mittels einer IQ-Modulation erhöht und erniedrigt, dass die in einem dann modulierten HF-Trägersignal resultierenden HF-Trägereckfrequenzen bei Frequenzwechsel eine gleiche Phase aufweisen. Das HF-Trägersignal wird anschließend gesendet und zugleich mit einem vom mobilen Objekt zurückgestreuten HF-Trägersignal zu einem Trägerphasensignal vermischt. Es wird für beide HF-Trägereckfrequenzen die zugehörige Trägerphase sequentiell ermittelt und dann aus deren Differenz der Abstand zwischen Basisstation und dem jeweiligen mobilen Objekt bestimmt. Bei dem in der Offenlegungsschrift beschriebenen Verfahren treten allerdings verfahrensbedingte Messfehler auf.

Der Erfindung liegt daher die Aufgabe zu Grunde, ein verbessertes Verfahren zur Bestimmung des Abstands zwischen einem Schreib-/Lesegerät und einem mobilen Datenspeicher anzugeben.

Die Aufgabe wird mit dem in Patentanspruch 1 angegebenen Verfahren zur Abstandsbestimmung und mit der in Patentanspruch 12 angegebenen Vorrichtung zur Abstandsbestimmung gelöst. Weitere vorteilhafte Ausführungen sind in den Unteransprüchen aufgeführt.

Durch die Erfindung wird ein verbessertes Verfahren zur Abstandsbestimmung zwischen einem Schreib-/Lesegerät und einem mobilen Datenspeicher geschaffen, wobei vom Schreib-/Lesegerät folgende Schritte ausgeführt werden: Es wird ein HF-Trägersignal erzeugt, das sequentiell alternierend eine erste Trägereckfrequenz ($f_0+f_1$) und eine zweite Trägereckfrequenz ($f_0-f_1$) aufweist, wobei die Phasen der ersten und der zweiten Trägereckfrequenz bei Frequenzwechsel gleich sind. Das HF-Trägersignal wird abgestrahlt und ein Trägerphasensignal wird erzeugt durch Mischen des HF-Trägersignals mit einem zuvor abgestrahlten, vom mobilen Datenspeicher gestreuten und wieder empfangenen HF-Trägersignal. Für die beiden im Trägerphasensignal enthaltenen Trägereckfrequenzen ($f_0+f_1, f_0-f_1$) wird jeweils eine Trägerphase sequentiell ermittelt und der Abstand zwischen dem Schreib-/Lesegerät und dem mobilen Datenspeicher wird aus der Differenz der Trägerphasen bestimmt, wobei eine Eindeutigkeitsgrenze für die Abstandsbestimmung größer ist als eine Erfassungsgrenze, wobei die Eindeutigkeitsgrenze von der Differenz der Trägereckfrequenzen ($f_0+f_1, f_0-f_1$) abhängt und wobei die Erfassungsgrenze der maximal mögliche bestimmbare Abstand zwischen dem Schreib-/Lesegerät und dem mobilen Datenspeicher ist.

Das erfindungsgemäße Verfahren ist besonders vorteilhaft, weil die Eindeutigkeitsgrenze für die Abstandsbestimmung größer ist als die Erfassungsgrenze. Damit ist sichergestellt, dass ein verfahrensbedingter systematischer Messfehler, der zu kleine Abstandswerte liefert und auf den weiter unten im Detail eingegangen wird, nicht auftritt. Eine falsche Bestimmung des Abstandes eines mobilen Objekts kann z.B. in einer Fertigungsstrasse fatale Folgen für den Fertigungsprozess haben, die durch das erfindungsgemäße Verfahren vermieden werden können.

Die Eindeutigkeitsgrenze hängt dabei von der Differenz der Trägereckfrequenzen ab, d.h. durch entsprechende Wahl der Trägereckfrequenzen kann die Eindeutigkeitsgrenze so eingestellt werden, dass sie über der Erfassungsgrenze liegt. Die Differenz der Trägereckfrequenzen wird im Folgenden auch als Frequenzhub bezeichnet.

Die Erfassungsgrenze ist der maximal mögliche Abstand zwischen einem mobilen Datenspeicher und einem Schreib-/Lesegerät für den eine Entfernungsmessung prinzipiell noch möglich ist. Dabei hängt die Erfassungsgrenze von der Leistung ab, mit der ein HF-Trägersignal vom Schreib-/Lesegerät gesendet wird. Diese muss ausreichend sein, damit das Signal zu Rausch Verhältnis des aus dem wieder empfangenen HF-Trägersignals erzeugten Trägerphasensignals groß genug ist, um daraus die Trägerphasen bestimmen zu können.

Verfahrensgemäß wird die Sendeleistung eines HF-Trägersignals nicht geändert.

In einer vorteilhaften Verfahrensvariante wird zwischen zwei Abstandsmessungen die erste und die zweite Trägereckfrequenz ($f_0+f_1, f_0-f_1$) geändert. Dies ist dann besonders vorteilhaft, wenn Störungen in einem Frequenzband auftreten. Durch Änderung der Frequenzen kann auf ein anderes Frequenzband ausgewichen werden.

In einer vorteilhaften Verfahrensvariante werden die beiden Trägereckfrequenzen so eingestellt, dass die Eindeutigkeitsgrenze doppelt so groß ist wie die Erfassungsgrenze.

Die Verwendung des Verfahrens mit einem Eindeutigkeitsbereich, der um irgendeinen Faktor, z.B. den Faktor zwei, größer ist als die Erfassungsgrenze hat den Vorteil, dass, wenn man den Fakor entsprechend groß wählt, auch bei einer Änderung der Erfassungsgrenze gewährleistet ist, dass die Eindeutigkeitsgrenze größer bleibt wie die Erfassungsgrenze. Die Erfassungsgrenze kann sich z.B. ändern, wenn sich das Schreib-/Lesegerät und der mobile Datenspeicher in einer Umgebung befinden, in der sich die Reflexionswege des HF-Trägersignals zwischen dem Schreib-/Lesegerät und dem mobilen Datenspeicher ändern.

In einer weiteren vorteilhaften Verfahrensvariante wird das HF-Trägersignal durch IQ-Modulation eines zweiten Signals mit einer zweiten Frequenz ($f_0$) mit einem ersten Signal mit einer ersten Frequenz ($f_1$) erzeugt. Dabei wird die zweite Frequenz ($f_0$) sequentiell so um die erste Frequenz ($f_1$) erhöht oder erniedrigt, dass die im HF-Trägersignal enthaltenen Trägereckfrequenzen bei Frequenzwechsel phasengleich sind, wobei das erste Signal durch eine digital/analog Umwandlung einer in einer Tabelle gespeicherten Signalform erzeugt wird, wobei die Tabelle und die digital/analog Umwandlung mit einem Taktsignal mit einer Taktfrequenz ($f_{Takt}$) getaktet werden, wobei die gespeicherte Signalform dem Signal der ersten Frequenz ($f_1$) entspricht und wobei ein linearer Zusammenhang zwischen der ersten Frequenz ($f_1$) und der Taktfrequenz ($f_{Takt}$) besteht.

Dies hat den Vorteil, dass die Erzeugung des HF-Trägersignals relativ einfach über IQ-Modulation von vorgegebenen Signalen bewerkstelligt werden kann und der Frequenzhub durch Änderung der Taktfrequenz ($f_{Takt}$), die linear mit der ersten Frequenz zusammenhängt, geändert werden kann. Somit kann auf sehr einfacher Art und Weise, nämlich durch Änderung des Taktsignals, die Eindeutigkeitsgrenze geändert werden.

In einer vorteilhaften Verfahrensvariante wird zwischen zwei Abstandsmessungen die erste Frequenz ($f_1$) oder die zweiten Frequenz ($f_0$) geändert.

Die Änderung der ersten Frequenz bzw. der zweiten Frequenz zwischen zwei Abstandsmessungen ist dann besonders vorteilhaft, wenn Störungen in einem Frequenzband auftreten. Durch Änderung der Frequenzen kann auf ein anderes Frequenzband ausgewichen werden.

In einer weiteren vorteilhaften Verfahrensvariante wird die Taktfrequenz ($f_{Takt}$) so eingestellt, dass die von der ersten Frequenz ($f_1$) abhängige Eindeutigkeitsgrenze mindestens doppelt so groß ist wie die Erfassungsgrenze.

Nach einer vorteilhaften Verfahrensvariante wird ein Übertragungskanal mit einem oder mehreren Kanälen zur Abstandsbestimmung zwischen dem Schreib-/Lesegerät und dem mobilen Datenspeicher verwendet. In einer besonders vorteilhaften Ausführungsform entspricht dabei der Übertragungskanal dem Notification Channel des ISO-18000-4-MOD-3 Standards.

In einer weiteren Ausführungsform wird das Verfahren für ein Identifikationssystem mit einem Schreib-/Lesegerät und mindestens einem an Transportgegenständen angebrachten mobilen Datenspeicher zur Bestimmung von gegenstandsbezogenen Zustands- und Prozessdaten verwendet.

In einer weiteren vorteilhaften Verfahrensvariante wird die Abstandsbestimmung zwischen einem Schreib-/Lesegerät und selektiv einem mobilen Datenspeicher aus einer Gruppe von mehreren mobilen Datenspeichern, die sich innerhalb der Eindeutigkeitsgrenze für die Abstandsbestimmung befinden, durchgeführt.

In einem anderen Aspekt betrifft die Erfindung ein Computerprogrammprodukt mit Computer ausführbaren Instruktionen, um ein Verfahren gemäß der Erfindung durchzuführen.

In einem anderen Aspekt betrifft die Erfindung eine Vorrichtung zur Abstandsbestimmung zwischen einem Schreib-/Lesegerät und einem mobilen Datenspeicher mit Mitteln zur Erzeugung eines HF-Trägersignals, wobei das HF-Trägersignal sequentiell alternierend eine erste Trägereckfrequenz $(f_0+f_1)$ und eine zweite Trägereckfrequenz $(f_0-f_1)$ aufweist, wobei die Phasen der ersten und zweiten Trägereckfrequenz $(f_0+f_1,f_0-f_1)$ bei Frequenzwechsel gleich sind. Ferner mit Mitteln zur Abstrahlung des HF-Trägersignals und mit Mitteln zur Erzeugung eines Trägerphasensignals durch Mitteln zum Mischen des HF-Trägersignals mit einem zuvor mittels Mitteln zum Abstrahlen und Empfangen abgestrahlten, vom mobilen Datenspeicher gestreuten, und wieder empfangenen HF-Trägersignal. Des Weiteren mit Mitteln zur sequentiellen Ermittelung von jeweils einer Trägerphase für die beiden im Trägerphasensignal enthaltenen Trägereckfrequenzen $(f_0+f_1,f_0-f_1)$ und mit Mitteln zur Bestimmung des Abstands zwischen dem Schreib-/Lesegerät und dem mobilen Datenspeicher aus der Differenz der Trägerphasen, wobei eine Eindeutigkeitsgrenze für die Abstandsbestimmung größer ist als eine Erfassungsgrenze, wobei die Eindeutigkeitsgrenze von der Differenz der Trägereckfrequenzen $(f_0+f_1,f_0-f_1)$ abhängt und wobei die Erfassungsgrenze der maximal mögliche bestimmbare Abstand zwischen dem Schreib-/Lesegerät und dem mobilen Datenspeicher ist.

Bevorzugte Ausführungsformen der Erfindung werden nachfolgend anhand der Zeichnungen näher erläutert.

FIG 1    zeigt ein Blockdiagramm einer Vorrichtung zur Abstandsbestimmung.

FIG 2    zeigt eine beispielhafte Datenstruktur eines Übertragungskanals.

FIG 3    zeigt schematische eine Schaltung die erfindungsgemäß zur Abstandsbestimmung verwendet werden kann.

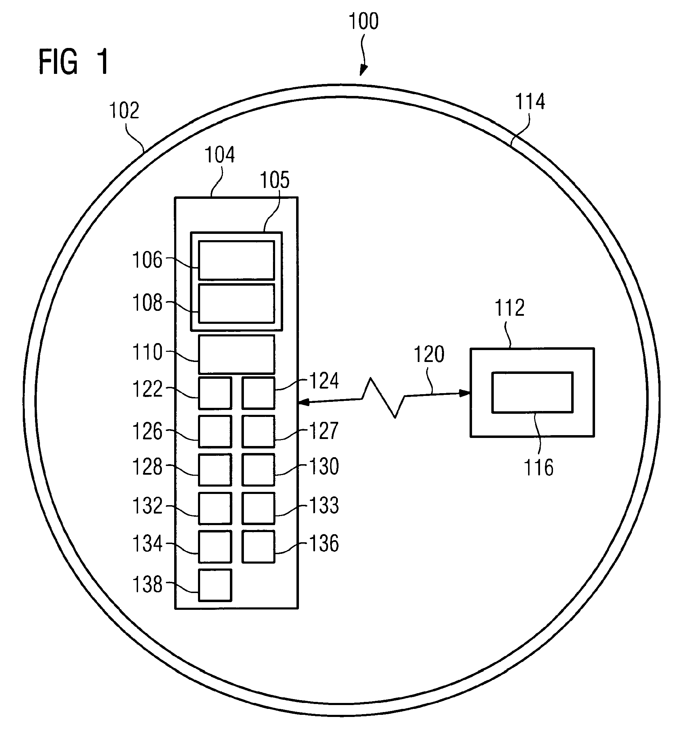

FIG 1 zeigt ein Blockdiagramm einer Vorrichtung zur Abstandsbestimmung mit einem Schreib-/Lesegerät 104 und einem mobilen Datenspeichern 112. Das Schreib-/Lesegerät 104 enthält einen Sendeempfänger 105 und eine logische Schaltung 110. Der Sendeempfänger enthält des Weiteren eine Antenne 106 und einen IQ-Modulator 108. Der mobile Datenspeicher 112 enthält eine Antenne 116. Die Kommunikation zwischen Schreib-/Lesegerät 104 und dem mobilen Datenspeicher 112 findet über die Luftschnittstelle 120 statt.

Erfindungsgemäß wird ein HF-Trägersignal 126 erzeugt, wobei das HF-Trägersignal 126 eine sequentiell alternierende erste und eine zweite Trägereckfrequenz 136, 138 aufweist, die bei Frequenzwechsel phasengleich sind. Das HF-Trägersignal 126 wird mittels der Antenne 108 abgestrahlt.

Des Weiteren wird ein Trägerphasensignal 130 erzeugt durch Mischen des HF-Trägersignals 126 mit einem zuvor abgestrahlten, und wieder empfangenen HF-Trägersignals 127, das von der Antenne 116 des mobilen Datenspeichers 116 empfangen, vom mobilen Datenspeicher 116 moduliert und dann von der Antenne 116 wieder abgestrahlt wurde. Für die beiden im Trägerphasensignal 130 enthalten Trägereckfrequenzen 136, 138 wird jeweils eine Trägerphase 132, 133 sequentiell ermittelt und aus der Differenz der Trägerphasen 132, 133 wird der Abstand 134 zwischen Schreib-/Lesegerät 104 und mobilen Datenspeicher 112 bestimmt. Dabei werden die Trägereckfrequenzen 136,138 so eingestellt, dass eine Eindeutigkeitsgrenze 102, die antiproportional zur Differenz der Trägereckfrequenzen 136, 138 ist, größer ist als eine Erfassungsgrenze 114, wobei die Erfassungsgrenze 114 der maximal mögliche bestimmbare Abstand zwischen dem Schreib-/Lesegerät 104 und dem mobilen Datenspeicher 112 ist. Die Erfassungsgrenze 114 ist somit der maximale mögliche Abstand den ein mobiler Datenspeicher 112 haben kann, damit das gestreute und wieder empfangene HF-Trägersignal 127 noch zur Abstandsbestimmung verwendet werden kann. Aus einem HF-Trägersignal 127, das von einem mobilen Datenspeicher außerhalb der Erfassungsgrenze 114 zurückgestreut wurde, kann in der Regel noch ein Trägerphasensignal 130 erzeugt werden. Das Signal zu Rausch Verhältnis ist allerdings zu gering, um die Trägerphasen 132,133 und daraus dann den Abstand 134 zu ermitteln.

In einer bevorzugten Ausführungsform erzeugt das Schreib-/Lesegerät 104 ein erstes Signal 122 mit einer ersten Frequenz $(f_0)$. Dieses wird aus einer Signalform, die in Tabellen auf der digitalen Schaltung 110 gespeichert ist mittels digital/analog Konvertern, die im Modulator 108 enthalten sind, erzeugt. Dabei werden sowohl die digital/analog Konverter als auch die Tabellen von einem in der digitalen Schaltung 110 erzeugten Taktsignal 124 mit der Taktfrequenz $(f_{Takt})$ getaktet.

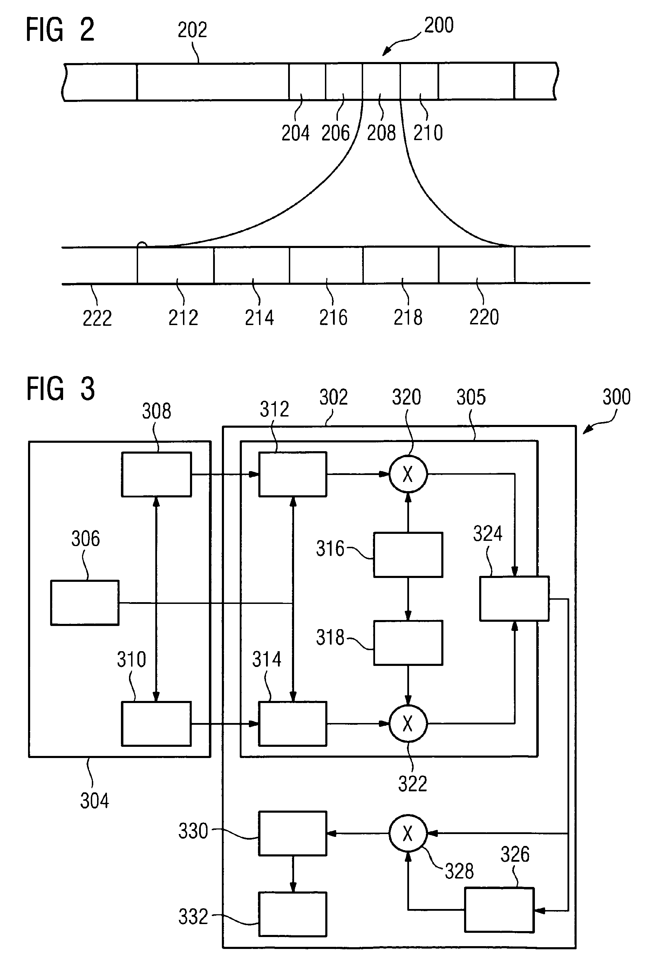

Fig. 2 zeigt ein Blockdiagramm aus einem Teil der Datenstruktur eines Übertragungskanals N-CH 202 für die Kommunikation zwischen einem Schreib-/Lesegerät und einem mobilen Datenspeicher. Die Datenstruktur des Übertragungskanals 202 entspricht der des Notification Channels im ISO-18000-4-MOD3 Standards. Zur Abstandsmessung werden ein Kanal oder mehrere Kanäle 204, 206, 208, 210 benutzt. Das sind z.B. bei Verwendung des ISO-18000-4-MOD3 Standards die R2 Kanäle im Notification Channel des ISO-18000-4-MOD3 Standards.

In 200 ist eine Unterstruktur 222 des Kanals 208, der zur Abstandsmessung verwendet wird, schematisch dargestellt. Darin sind fünf Zeitblöcke 212, 214, 216, 218 und 220 enthalten. Wie weiter oben erwähnt, werden in einer Verfahrensvariante die Trägereckfrequenzen mittels IQ-Modulation aus einer ersten Frequenz $(f_1)$ und einer zweiten

Frequenz ($f_2$) erzeugt.

Dazu erfolgt im ersten Zeitblock 212 die Einstellung der zweiten Frequenz ($f_0$). Im Zeitblock 214 wird die HF-Trägereckfrequenz ($f_0-f_1$) durch den IQ-Modulator eingestellt. Anschließend werden im Zeitblock 216 die erste Trägerphase $\phi_1$ ermittelt und die entsprechenden Messdaten durch einen digitalen Signalprozessor weiterverarbeitet. Im Zeitblock 218 wird die HF-Trägereckfrequenz ($f_0+f_1$) durch den IQ-Modulator eingestellt und in Zeitblock 220 wird die Trägerphase $\phi_2$ ermittelt, woraus dann $d\phi = \phi_1-\phi_2$ ermittelt wird.

Wie bereits weiter oben erwähnt, kann durch Änderung der ersten Frequenz ($f_1$) die Eindeutigkeitsgrenze einer Abstandsmessung geändert werden. Die Eindeutigkeitsgrenze ist der maximale Abstand zwischen Schreib-/Lesegerät und mobilem Datenspeicher innerhalb dessen eine Abstandsmessung ohne systematische Fehlmessung durchgeführt werden kann. Der Abstand d zwischen Schreib-/Lesegerät und mobilem Datenspeicher wird aus der Differenz der Trägerphasen $d\phi$ durch folgende Formel bestimmt:

$$d^{[dm]} = 4.166 * d\phi^{[°]} / (2*f_1)^{[MHz]}.$$

Dabei ist die Differenz der Trägerphasen $d\phi$ in Grad und die erste Frequenz $f_1$ in MHz anzugeben. Das Ergebnis ist der Abstand d in Dezimetern. Im allgemeinen Fall werden die HF-Trägereckfrequenzen nicht mittels IQ-Modulation erzeugt. Dann steht im Nenner der obigen Formel anstatt $2f_1$ die Differenz der Trägereckfrequenzen.

Es gilt jedoch im Allgemeinen, dass die maximal mögliche Differenz der Trägerphasen, aus der ohne systematischen Fehler der Abstand ermittelt werden kann, 360° beträgt. Daraus folgt dann z.B. bei Verwendung von $f_1$ = 1.5 MHz eine Eindeutigkeitsgrenze von etwa 50 m, wohingegen die Verwendung von $f_1$ = 1.5 *2=3 MHz eine Eindeutigkeitsgrenze von 25 m zur Folge hätte. Liegt nun die Erfassungsgrenze bei 40 m und befindet sich ein mobiler Datenspeicher im Abstand von 30 m vom Schreib-/Lesegerät, so würde dieser bei Verwendung von $f_1$ = 3 MHZ zu 5 Metern bestimmt werden (Eindeutigkeitsgrenze 25 m), während bei einer Verwendung von $f_1$ = 1.5 MHz (Eindeutigkeitsgrenze 50 m) dieses Problem erst auftritt, wenn sich ein mobiler Datenspeicher im Abstand über 50 m vom Schreib-/Lesegerät befindet. Dann ist allerdings die Leistung des vom mobilen Datenspeicher zurückgesendeten und vom Schreib-Lesegerät empfangenen Signals so schwach (Erfassungsgrenze 40 m), dass es nicht mehr zu einer Abstandsmessung verwendet werden kann. Das Signal zu Rausch Verhältnis des detektierten Signals ist zu klein, um eine Abstandsbestimmung zu ermöglichen. Durch Verringern von ($f_1$) kann die Eindeutigkeitsgrenze einer Abstandsmessung über die Erfassungsgrenze hinaus vergrößert werden. Damit kann der Abstand zwischen einem Schreib-/Lesegerät und einem sich innerhalb der Eindeutigkeitsgrenze befindenden mobilen Datenspeicher genau bestimmt werden, ohne dass der systematische Messfehler auftritt.

Der Abstand zwischen einem Schreib-/Lesegerät und einem mobilen Datenspeichers, der sich außerhalb der Eindeutigkeitsgrenze befindet, wird nun nicht mehr als zu klein bestimmt, weil die Eindeutigkeitsgrenze durch Änderung der Frequenz ($f_1$) so groß ist, dass die Leistung eines reflektierten Signals zu schwach ist, um noch zu einer Abstandsmessung verwendet werden zu können.

Fig. 3 zeigt schematisch eine Schaltung, die in einer erfindungsgemäßen Ausführungsform zur Abstandsbestimmung verwendet wird. Das Schreib-/Lesegerät, mit dem der Abstand zum mobilen Datenspeicher gemessen wird, beinhaltet dabei einen Sendeempfänger 302 und eine digitale Schaltung 304. Der Sendeempfänger 302 beinhaltet einen IQ-Modulator 305, eine Antenne 326, einen Mischer 328, eine Filter und Tiefpass 330 und eine Signalverarbeitungseinheit 332. Der IQ-Modulator 305 beinhaltet ferner zwei digital/analog Konverter 312, 314, zwei Mischer 320, 322, einen Oszillator 316, einen 90°-Phasenschieber 318 und einen HF-Combiner 324.

Die digitale Schaltung 304, die z.B. ein Field Programable Gate Array (FPGA) sein kann, beinhaltet einen Taktsignalgeber 306 zur Erzeugung der Frequenz $f_{Takt}$ und ferner zwei sogenannte "Look-up Tables" ILT 308 bzw. QLT 310, welche Abtastwerte für die notwendige Signalwellenform für eine Modulation enthalten. Diese werden den im IQ-Modulator 305 enthaltenen digital/analog Konvertern (DACs) 312 und 314 zugeführt und somit in analoge Signale mit der ersten Frequenz $f_1$ umgesetzt. Die "Look-up Tables" ILT 308 bzw. QLT 310 und die DACs 312 und 314 werden mit der Frequenz $f_{Takt}$ des Ausgabesignals betrieben. Wird die Frequenz $f_{Takt}$ reduziert, dann werden entsprechend die "Look-up Tables" ILT 308 bzw. QLT 310 und die DACs 312, 314 langsamer betrieben. Dadurch ergibt sich ein linearer Zusammenhang zwischen der ersten Frequenz ($f_1$) und der Frequenz ($f_{Takt}$). Das von den DACs 312 und 314 ausgegebene Signal mit der ersten Frequenz ($f_1$) wird mit den Mischern 320 und 322 mit dem vom Oszillator gelieferten zweiten Signal mit der zweiten Frequenz ($f_0$) gemischt, wobei der 90°-Phasenschieber das zweite Signal, welches im Mischer 322 gemischt wird bezüglich des zweiten Signals das im Mischer 320 gemischt wird, um 90° in der Phase verschiebt. Die Ausgangssignale der beiden Mischer 320 und 322 werden im HF-Combiner 324 zum HF-Trägersignal addiert und der Antenne 326 zugeführt.

Ein von der Antenne 326 empfangenes HF-Trägersignal wird mit einem zu sendenden Trägersignal im Mischer 328 zum Trägerphasensignal gemischt. Über den Filter und den Tiefpass 330 werden störende Frequenzanteile entfernt. Die jeweilige Phase $\phi_1$ und $\phi_2$ wird dann in einer elektronischen Signalverarbeitungseinheit 332 zugeführt und der zugehörige Abstand rechnerisch bestimmt. Durch Verkleinerung der Taktfrequenz ($f_{Takt}$) verkleinert sich die erste Frequenz ($f_1$), wodurch sich die Eindeutigkeitsgrenze erhöht.

Bei Einsatz dieses Verfahrens innerhalb eines Identifikationssystems gemäß des ISO-18000-4-MOD3 Standards kann daher nur durch Reduzierung der Taktfrequenz ($f_{Takt}$) während der Abstandsbestimmung die Eindeutigkeitsgrenze so erhöht werden, dass sie über der Erfassungsgrenze liegt und somit der systematische Messfehler in der Abstandsbestimmung vermieden werden.

**Patentansprüche**

1.  Verfahren zur Abstandsbestimmung zwischen einem Schreib-/Lesegerät (SLG) (104) und einem mobilen Datenspeicher (MDS) (112), wobei folgende Schritte vom SLG (104) ausgeführt werden:

    a) Erzeugung eines HF-Trägersignals (126), wobei das HF-Trägersignal (126) sequentiell alternierend eine erste Trägereckfrequenz ($f_0+f_1$) (136) und eine zweite Trägereckfrequenz ($f_0-f_1$) (138) aufweist, wobei die Phasen der ersten und zweiten Trägereckfrequenz ($f_0+f_1,f_0-f_1$) (136,138) bei Frequenzwechsel gleich sind;
    b) Abstrahlung des HF-Trägersignals (126);
    c) Erzeugung eines Trägerphasensignals (130) durch Mischen des HF-Trägersignals (126) mit einem zuvor abgestrahlten, vom MDS (112) gestreuten, und wieder empfangenen HF-Trägersignal (127);
    d) sequentielle Ermittelung von jeweils einer Trägerphase (132, 133) für die beiden im Trägerphasensignal (130) enthaltenen Trägereckfrequenzen ($f_0+f_1,f_0-f_1$) (136,138) und Bestimmung des Abstands (134) zwischen dem SLG (104) und dem MDS (112) aus der Differenz der Trägerphasen, wobei eine Eindeutigkeitsgrenze (102) für die Abstandsbestimmung größer ist als eine Erfassungsgrenze (114), wobei die Eindeutigkeitsgrenze (102) von der Differenz der Trägereckfrequenzen ($f_0+f_1, f_0-f_1$) (136,138) abhängt und wobei die Erfassungsgrenze (114) der maximal mögliche bestimmbare Abstand zwischen dem SLG (104) und dem MDS (112) ist.

2.  Verfahren nach Anspruch 1, wobei zwischen zwei Abstandsmessungen die erste und die zweite Trägereckfrequenz ($f_0+f_1,f_0-f_1$) (136,138) geändert wird.

3.  Verfahren nach einem der Ansprüche 1 oder 2, wobei die beiden Trägereckfrequenzen (136,138) so eingestellt werden, dass die Eindeutigkeitsgrenze (102) für die Abstandsbestimmung doppelt so groß ist wie die Erfassungsgrenze (114).

4.  Verfahren nach einem der Ansprüche 1, 2 oder 3, wobei das HF-Trägersignal (126) durch IQ-Modulation eines zweiten Signals (128) mit einer zweiten Frequenz ($f_0$) mit einem ersten Signal (122) mit einer ersten Frequenz ($f_1$) erzeugt wird, wobei die zweite Frequenz ($f_0$) sequentiell so um die erste Frequenz ($f_1$) erhöht oder erniedrigt wird, dass die im HF-Trägersignal (126) enthaltenen Trägereckfrequenzen (136,138) bei Frequenzwechsel phasengleich sind, wobei das erste Signal (122) durch eine digital/analog Umwandlung einer in einer Tabelle gespeicherten Signalform erzeugt wird, wobei die Tabelle und die digital/analog Umwandlung mit einem Taktsignal (124) mit einer Taktfrequenz ($f_{Takt}$) getaktet werden, wobei die gespeicherte Signalform dem Signal (122) der ersten Frequenz ($f_1$) entspricht und wobei ein linearer Zusammenhang zwischen der der ersten Frequenz ($f_1$) und der Taktfrequenz ($f_{Takt}$) besteht.

5.  Verfahren nach Anspruch 4, wobei zwischen zwei Abstandsmessungen die Frequenz ($f_0$) des zweiten Signals (128) oder die Frequenz ($f_1$) des ersten Signals (122) geändert wird.

6.  Verfahren nach einem der Ansprüche 4 oder 5, wobei die Taktfrequenz $f_{Takt}$ so eingestellt ist, dass die von der ersten Frequenz ($f_1$) abhängige Eindeutigkeitsgrenze (102) mindestens doppelt so groß ist wie die Erfassungsgrenze (114).

7.  Verfahren nach einem der Ansprüchen 1 bis 6, wobei ein Übertragungskanal mit einem oder mehreren Kanälen zur Abstandsbestimmung zwischen dem SLG (104) und dem MDS (112) verwendet wird.

8.  Verfahren nach einem der Ansprüche 1 bis 7, wobei der Übertragungskanal dem Notification-Channel des ISO-18000-4-MOD3-Standards entspricht.

9. Verfahren nach einem der Ansprüche 1 bis 8 für ein Identifikationssystem (102) mit einem SLG (104) und mindestens einem an Transportgegenständen angebrachten MDS (112) zur Bestimmung von gegenstandsbezogenen Zustands- und Prozessdaten.

10. Verfahren nach einem der vorherigen Ansprüche, wobei die Abstandsbestimmung zwischen dem SLG (104) und selektiv einem MDS (112) aus einer Gruppe von mehreren mobilen Datenspeichern, die sich innerhalb der Erfassungsgrenze (114) für die Abstandsbestimmung befinden, durchgeführt wird.

11. Computerprogrammprodukt, mit Computer ausführbaren Instruktionen, um ein Verfahren gemäß einem der Ansprüche 1 bis 8 auszuführen.

12. Vorrichtung zur Abstandsbestimmung zwischen einem Schreib-/Lesegerät (SLG) (104) und einem mobilen Datenspeicher (MDS) (112) mit:

a) Mitteln zur Erzeugung eines HF-Trägersignals (126), wobei das HF-Trägersignal (126) sequentiell alternierend eine erste Trägereckfrequenz ($f_0+f_1$) (136) und eine zweite Trägereckfrequenz ($f_0-f_1$) (138) aufweist, wobei die Phasen der ersten und zweiten Trägereckfrequenz ($f_0+f_1,f_0-f_1$) (136,138) bei Frequenzwechsel gleich sind;
b) Mitteln zur Abstrahlung des HF-Trägersignals (126);
c) Mitteln zur Erzeugung eines Trägerphasensignals (130) durch Mitteln zum Mischen des HF-Trägersignals (126) mit einem zuvor abgestrahlten, vom MDS (112) gestreuten, und wieder empfangenen HF-Trägersignal (127);
d) Mitteln zur sequentiellen Ermittelung von jeweils einer Trägerphase (132, 133) für die beiden im Trägerphasensignal (130) enthaltenen Trägereckfrequenzen ($f_0+f_1,f_0-f_1$) (136,138) und Mitteln zur Bestimmung des Abstands (134) zwischen dem SLG (104) und dem MDS (112) aus der Differenz der Trägerphasen, wobei eine Eindeutigkeitsgrenze (102) für die Abstandsbestimmung größer ist als eine Erfassungsgrenze (114), wobei die Eindeutigkeitsgrenze (102) von der Differenz der Trägereckfrequenzen ($f_0+f_1,f_0-f_1$) (136,138) abhängt und wobei die Erfassungsgrenze (114) der maximal mögliche bestimmbare Abstand zwischen dem SLG (104) und dem MDS (112) ist.

13. Vorrichtung nach Anspruch 12, wobei zwischen zwei Abstandsmessungen die erste und die zweite Trägereckfrequenz ($f_0+f_1,f_0-f_1$) (136,138) geändert wird.

14. Vorrichtung nach einem der Ansprüche 12 oder 13, wobei die beiden Trägereckfrequenzen (136,138) so eingestellt werden, dass die Eindeutigkeitsgrenze (102) für die Abstandsbestimmung doppelt so groß ist wie die Erfassungsgrenze (114).

15. Vorrichtung nach einem der Ansprüche 12, 13 oder 14, wobei das HF-Trägersignal (126) durch IQ-Modulation eines zweiten Signals (128) mit einer zweiten Frequenz ($f_0$) mit einem ersten Signal (122) mit einer ersten Frequenz ($f_1$) erzeugt wird, wobei die zweite Frequenz ($f_0$) sequentiell so um die erste Frequenz ($f_1$) erhöht oder erniedrigt wird, dass die im HF-Trägersignal (126) enthaltenen Trägereckfrequenzen bei Frequenzwechsel phasengleich sind, wobei das erste Signal durch eine digital/analog Umwandlung einer in einer Tabelle gespeicherten Signalform erzeugt wird, wobei die Tabelle und die digital/analog Umwandlung mit einem Taktsignal (124) mit einer Taktfrequenz ($f_{Takt}$) getaktet werden, wobei die gespeicherte Signalform dem Signal (122) der ersten Frequenz ($f_1$) entspricht und wobei ein linearer Zusammenhang zwischen der ersten Frequenz ($f_1$) und der Taktfrequenz ($f_{Takt}$) besteht.

16. Vorrichtung nach Anspruch 15, wobei zwischen zwei Abstandsmessungen die Frequenz ($f_0$) des zweiten Signals (128) oder die Frequenz ($f_1$) des ersten Signals (122) geändert wird.

17. Vorrichtung nach einem der Ansprüche 15 oder 16, wobei die Taktfrequenz ($f_{Takt}$) so eingestellt ist, dass die von der ersten Frequenz ($f_1$) abhängige Eindeutigkeitsgrenze (102) mindestens doppelt so groß ist wie die Erfassungsgrenze (114).

18. Vorrichtung nach einem der Ansprüchen 12 bis 17, wobei ein Übertragungskanal mit einem oder mehreren Kanälen zur Abstandsbestimmung zwischen dem SLG (104) und dem MDS (112) verwendet wird.

19. Vorrichtung nach einem der Ansprüche 12 bis 18, wobei der Übertragungskanal dem Notification-Channel des ISO-18000-4-MOD3-Standards entspricht.

**20.** Vorrichtung nach einem der Ansprüche 12 bis 19 für ein Identifikationssystem (102) mit einem SLG (104) und mindestens einem an Transportgegenständen angebrachten MDS (112) zur Bestimmung von gegenstandsbezogenen Zustands- und Prozessdaten.

**21.** Vorrichtung nach einem der Ansprüche 12 bis 20, wobei die Abstandsbestimmung zwischen dem SLG (104) und selektiv einem MDS (112) aus einer Gruppe von mehreren mobilen Datenspeichern, die sich innerhalb der Erfassungsgrenze (114) für die Abstandsbestimmung befinden, durchgeführt wird.

FIG 1

## FIG 2

## FIG 3

**Europäisches Patentamt**

**EUROPÄISCHER TEILRECHERCHENBERICHT**

der nach Regel 45 des Europäischen Patentübereinkommens für das weitere Verfahren als europäischer Recherchenbericht gilt

**Nummer der Anmeldung**

EP 05 02 0151

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| L | US 4 804 961 A (HANE ET AL) 14. Februar 1989 (1989-02-14) * Spalte 9, Zeile 14 - Zeile 51 * ----- | 1-21 | G01S13/75 G01S7/03 G01S13/08 |
| L | EP 1 107 162 A (SIEMENS AKTIENGESELLSCHAFT) 13. Juni 2001 (2001-06-13) * Absatz [0010] - Absatz [0011] * ----- | 1-21 | |
| D,X | DE 102 61 098 A1 (SIEMENS AG) 15. Juli 2004 (2004-07-15) * das ganze Dokument * ----- | 1-21 | |

**RECHERCHIERTE SACHGEBIETE (IPC)**

G01S

### UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| München | 16. Dezember 2005 | Saur, E |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C09)

**Europäisches**
**Patentamt**

**UNVOLLSTÄNDIGE RECHERCHE**
**ERGÄNZUNGSBLATT C**

**Nummer der Anmeldung**

EP 05 02 0151

Unvollständig recherchierte Ansprüche:
      1-21

Nicht recherchierte Ansprüche:
         -

Grund für die Beschränkung der Recherche:

Die Offenbarung eines wesentlichen Teils der vorliegenden Erfindung wird
als derartig unzureichend angesehen, daß der Fachmann nicht in der Lage
ist, diesen Teil auszuführen, Art. 83 EPÜ. Demzufolge war eine Recherche
der zugehörigen  Merkmale nicht möglich, R. 45 EPÜ. Die Recherche
beschränkte sich auf diejenigen Merkmale der Anmeldung, welche die
generelle Beschaffenheit des "Schreib-Lesegeräts (104)" und des "mobilen
Datenspeichers (112)" betreffen.

Insbesondere enthalten die unabhängigen Ansprüche 1 und 12 die folgende
apodiktische Definition:

"wobei eine Eindeutigkeitsgrenze (102) für die Abstandsbestimmung größer
ist als eine Eindeutigkeitsgrenze (114)"
Es ist aus der gesamten Anmeldung nicht ersichtlich, durch welche
technischen Maßnahmen diese Forderung erfüllt werden soll.

**ANHANG ZUM EUROPÄISCHEN RECHERCHENBERICHT
ÜBER DIE EUROPÄISCHE PATENTANMELDUNG NR.**

EP 05 02 0151

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-12-2005

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US | 4804961 | A | 14-02-1989 | EP<br>JP<br>SE<br>SE<br>WO | 0249638<br>63501981<br>456118<br>8505888<br>8703698 | A1<br>T<br>B<br>A<br>A1 | 23-12-1987<br>04-08-1988<br>05-09-1988<br>13-06-1987<br>18-06-1987 |
| EP | 1107162 | A | 13-06-2001 | KEINE | | | |
| DE | 10261098 | A1 | 15-07-2004 | AU<br>CA<br>CN<br>WO<br>EP<br>US | 2003296635<br>2479225<br>1692287<br>2004059340<br>1466189<br>2005099333 | A1<br>A1<br>A<br>A1<br>A1<br>A1 | 22-07-2004<br>15-07-2004<br>02-11-2005<br>15-07-2004<br>13-10-2004<br>12-05-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10261098 A1